# EUROPEAN PATENT APPLICATION

(11) **EP 4 691 583 A1**
(43) Date of publication of application: **11.02.2026**
(21) Application number: 24193161.7
(22) Date of filing: 06.08.2024
(51) Int. Cl.: A63F 13/65, A63F 13/497, G06T 11/00, G07F 17/32, G11B 27/031, H04N 21/2187, H04N 21/234

(54) **GENERATING A VIRTUAL RACE**

(71) Applicant: Highlight Games Limited, London W6 8DA (GB)
(72) Inventor: GRAHAM, Daniel Bernard, London, W6 8DA (GB); HOLMES, Steven John, London, W6 8DA (GB); RICKETTS, David Gwyn, London, W6 8DA (GB)
(74) Representative: Barker Brettell LLP

(57) **Abstract**

A computer implemented method (100; 300) for producing video data (200) of a virtual race for display at computing device. The method comprising: determining (102; 302) a randomly generated outcome of the virtual race; obtaining (104; 304) virtual race video data (200) which is representative of the virtual race and which corresponds to the randomly generated outcome. The virtual race video data comprises: one or more race video clips (202) recorded from a real-world race occurring prior to initiation of the virtual race at the computing device; and a virtual finish video clip (204) appended to the one or more race video clips (202) , wherein the virtual finish video clip (204) is a modified real-world finish clip (204') recorded from the, or another, real-world race occurring prior to the initiation of the virtual race, the real-world finish clip (204') having been modified to represent a race result that corresponds to the outcome of the virtual race. The method further comprises sending (106; 306) the virtual race video data (200) to a display of the computing device. An apparatus for carrying out the method is also disclosed.

## Description

### Technical field

The present application relates to a computer implemented method and apparatus for producing video data of a virtual race for display at a computing device.

### Background

Virtual sports events such as virtual races allow a user to experience a virtual competition or race which is based on a real-world event but has a different result. Such virtual races may be viewed by users as entertainment and the user may place a wager on the outcome of the race. The virtual race may therefore form part of a wager-based computerised gaming system that allows uses to place wagers on fictitious competitions rather than live or further sporting events.

The computerised production of virtual races that can be displayed to the user involves significant technical challenges. For example, it is important to produce a realistic representation of a race to provide a good user experience. In some examples, a computer-generated animation or rendering of a fictitious race may be produced and displayed on a display screen (e.g. television). Generating such an animation is however typically a resource intensive computer process. The memory and computer processing resources needed to generate a single animated race sequence, let alone a variety of different animated race sequences, are quite significant. If animations are not to be used, video footage of past real events must be relied on. That however limits the scope of the possible results of the virtual race because of the limited footage available. It also requires significant computational resources to process and store suitable amounts of real-world footage.

The present application aims to address one or more of these problems.

### Summary

In a first aspect, the present application provides a computer implemented method for producing video data of a virtual race for display at computing device, the method comprising any one or more of the following steps or features:
determining a randomly generated outcome of the virtual race;
obtaining virtual race video data which is representative of the virtual race and which corresponds to the randomly generated outcome, wherein the virtual race video data comprises:
   - one or more race video clips recorded from a real-world race occurring prior to initiation of the virtual race at the computing device; and
   - a virtual finish video clip appended to the one or more race video clips, wherein the virtual finish video clip is a modified real-world finish clip recorded from the, or another, real-world race occurring prior to the initiation of the virtual race, the real-world finish clip having been modified to represent a race result that corresponds to the outcome of the virtual race; and
   - sending the virtual race video data to a display of the computing device.

The methods of the present application produce video data for a virtual race by combining footage from a real-world event with a digitally modified finish video clip to give the required finish order of the virtual race. This reduces the need to rely on computationally intensive computer animation to produce a representation of a virtual race having the required finish order. The methods of the present application also provide an improved user experience by producing realistic video of a fictitious event. To improve realism using computer animation the computer processing power required to render detailed and realistic graphics is significant, making such methods technically difficult to implement and take a large amount of computing power and/or time to produce. The methods of the present application may further improve the user experience by allowing a virtual race to be based on a real-world event rather than a completely fictious event. For example, the virtual race may include real-world competitors and take part at real-world locations or be based on real-world competitions. These will be recognised by the user and improve the level of realism.

Obtaining the virtual race video data may comprise modifying the real-world finish clip in real time based on the randomly generated outcome of the virtual race. This may reduce the need to store large numbers of different virtual race video data sets corresponding to different outcomes of the virtual race. An existing finish clip is instead modified once the required finish order has been generated and the modifications required are known. This may reduce the computer resources required to implement the method of the first aspect.

Obtaining the virtual race video data may comprise:
obtaining the one or more race video clips from an archive storing a plurality of video clips corresponding to a plurality of real-world races which have occurred prior to initiation of the virtual race;
obtaining the real-world finish video clip from the archive of video clips;
modifying the real-world finish video clip to generate the virtual finish video clip according to the randomly generated outcome of the virtual race; and
appending the virtual finish video clip to the one or more race video clips.

The real-world finish video clip to be modified may be selected such that the amount of modification required to illustrate a race result corresponding to the outcome of the virtual race is minimised. This may reduce the amount of computer editing/manipulation of the video data that is needed to arrive at the required virtual finish clip. This may reduce the computer resources required to implement the method.

The virtual race video data may be obtained from an archive of pre-generated virtual race video data corresponding to a plurality of virtual races each having a different outcome. The virtual race video data may be selected from the archive such that it has an outcome corresponding to the randomly generated outcome of the virtual race. This may allow more time to produce the virtual race video data compared to generating it on demand. By allowing more time less computer processing power can be used.

The computer implemented method may further comprise generating the archive of virtual race video data. Generating the archive of virtual race video data may comprise:
obtaining one or more race video clips and a corresponding real-world finish video clip from an archive storing video clips corresponding to a plurality of real-world races;
modifying the real-world finish video clip to generate a plurality of virtual finish video clips corresponding to different possible outcomes of the respective real-world race; and
appending each of the virtual finish video clips to the one or more race video clips.

The plurality of virtual finish video clips may correspond to all of the (other) possible outcomes of the respective real-world race. The actual real-world finish outcome may be excluded from the generated video data and the random outcome generation.

The real-world finish video clip may be modified by altering:
- the position of the image of one or more of the competitors of the respective real-world race to alter the outcome illustrated; and/or
- the appearance of one or more of the competitors of the respective real-world race to alter the outcome illustrated.

The real-world finish video clip may be modified by image processing techniques including motion tracking, background/feature extraction and over-painting.

The real-world finish video clip may be modified using an AI based process configured to identify and alter the position and/appearance of features within the real-world finish video clip.

The virtual finish video clip may comprise audio data and video data. Modifying the real-world finish clip may comprise altering commentary audio data such that it corresponds with modifications to the race result.

The method of the first aspect may further comprise displaying the virtual race video data on the display of the computing device. The method of the first aspect may therefore be a computer implemented method for producing and displaying virtual race video data.

According to a second aspect, there is provided an apparatus for producing video data of a virtual race for display at computing device, the apparatus comprising one or more computer processors and a data storage device in communication with the one or more processors, the data storage device comprising code that, when executed, causes the one or more processors perform the following steps:
determine a randomly generated outcome of the virtual race;
obtain virtual race video data which is representative of the virtual race and which corresponds to the randomly generated outcome, wherein the virtual race video data comprises:
   - one or more race video clips recorded from a real-world race occurring prior to initiation of the virtual race at the computing device; and
   - a virtual finish video clip appended to the one or more race video clips, wherein the virtual finish video clip is a modified real-world finish clip recorded from the, or another, real-world race occurring prior to the initiation of the virtual race, the real-world finish clip having been modified to represent a race result that corresponds to the outcome of the virtual race; and
   - send the virtual race video data to a display of the computing device.

Obtaining the virtual race video data may comprise modifying the real-world finish clip in real time based on the randomly generated outcome of the virtual race.

Obtaining the virtual race video data may comprise:
obtaining the one or more race video clips from an archive storing a plurality of video clips corresponding to a plurality of real-world races which have occurred prior to initiation of the virtual race;
obtaining the real-world finish video clip from the archive of video clips;
modifying the real-world finish video clip to generate the virtual finish video clip according to the randomly generated outcome of the virtual race; and
appending the virtual finish video clip to the one or more race video clips.

The real-world finish video clip to be modified may be selected such that the amount of modification required to illustrate a race result corresponding to the outcome of the virtual race is minimised.

The virtual race video data may be obtained from an archive of pre-generated virtual race video data corresponding to a plurality of virtual races each having a different outcome.

The code may further cause the one or more processors to generate the archive of virtual race video data by:
obtaining one or more race video clips and a corresponding real-world finish video clip from an archive storing video clips corresponding to a plurality of real-world races;
modifying the real-world finish video clip to generate a plurality of virtual finish video clips corresponding to different possible outcomes of the respective real-world race; and
appending each of the virtual finish video clips to the one or more race video clips.

The plurality of virtual finish video clips may correspond to all of the (other) possible outcomes of the respective real-world race. All possible outcomes other than the actual real-world outcome may therefore be produced.

The code may cause the one or more processors to modify the real-world finish video clip by altering:
- the position of the image of one or more of the competitors of the respective real-world race to alter the outcome illustrated; and/or
- the appearance of one or more of the competitors of the respective real-world race to alter the outcome illustrated.

The code may cause the one or more processors to modify the real-world finish video clip by using image processing techniques including motion tracking, background/feature extraction and over-painting.

The real-world finish video clip may be modified using an AI based process configured to identify and alter the position and/appearance of features within the real-world finish video clip.

The real-world finish clip may comprise audio data and video data. The code may cause the one or more processors to modify the real-world finish clip by altering commentary audio data such that it corresponds with modifications to the race result.

The code may cause the one or more processors to display the video data of a virtual race on the display of the computing device.

According to a third aspect, the present application provides a computing apparatus/system/device configured to perform the method of the first aspect (or as defined or claimed anywhere herein).

According to a fourth aspect, the present application provides an apparatus for producing video data of a virtual race for display at a computing device, the apparatus comprising one or more computer processors and a data storage device in communication with the one or more processors, the data storage device comprising code that, when executed, causes the one or more processors to perform the method of the first aspect (or as defined anywhere else herein).

The apparatus of the second, third and fourth aspect may comprise a server in communication with a remote user device, the virtual race video data being sent from the server to the user device and displayed at a display of the user device. Alternatively, the apparatus of the second, third and fourth aspect may be a user device (e.g. a virtual game console) and may be configured to display the virtual race video data locally on a display of the user device.

According to a fifth aspect, the present application provides a computer program product, or non-transitory computer readable medium, comprising instructions which, when the program is executed by a computer, cause the computer to carry out the method of the first aspect (or as defined or claimed anywhere herein).

According to a sixth aspect, the present application provides a computer program comprising instructions which, when the program is executed by a computer, cause the computer to carry out the method of the first aspect (or as defined or claimed anywhere herein).

The skilled person will appreciate that except where mutually exclusive, a feature described in relation to any one of the above aspects may be applied to any other aspect.

### Brief Description of the Drawings

Embodiments of the invention will now be described, by way of example only, with reference to the accompanying drawings:
**Figure 1** shows a schematic illustration of a method for producing virtual race video data;
**Figure 2** shows a schematic illustration of the structure of the virtual race video data produced by the method of Figure 1;
**Figure 3** shows a schematic illustration of another method for producing virtual race video data;
**Figure 4A** shows an example of a frame of a real-world virtual race finish video clip;
**Figures 4B to 4D** show examples of a frame of a virtual race finish video clip that has been modified with respect to what is shown in Figure 4A;
**Figure 4E** shows an example of part of the modification process used to modify the frame shown in Figure 4A; and
**Figure 5** shows a schematic illustration of a virtual game configuration which may perform the methods of the present application.

### Detailed Description

Embodiments of the present application are directed to a computer implemented method and a system (i.e. apparatus) for producing video data of a virtual race (i.e. virtual race video data). The video data may be displayed at the display of a computing device. The embodiments of the present application use pre-recorded or pre-captured content of real-world events to generate a fictitious event. The pre-recorded content is therefore a visual/audio recording of a real event rather than a computer animation but can still be used to represent a fictitious event. By "virtual race" we mean an event that has a number of competitors that finish in a certain finishing order. This can be a sporting race such as horse racing, motor racing, greyhound racing, etc. The application is not however limited to those examples and can apply to any event in which there are a number of different competitors, and a virtual finish line clip or video sequence can be created showing the finishing order of those competitors as will be descried in more detail below. The virtual race video data generated by the methods and apparatus of the present application may be used as part of a virtual gaming system in which a user can place a wager on the outcome of the race. The present application is not however limited to that implementation, and the video data of the virtual race and be used for other purposes and forms of entertainment similar to the use of a video of a real-world race.

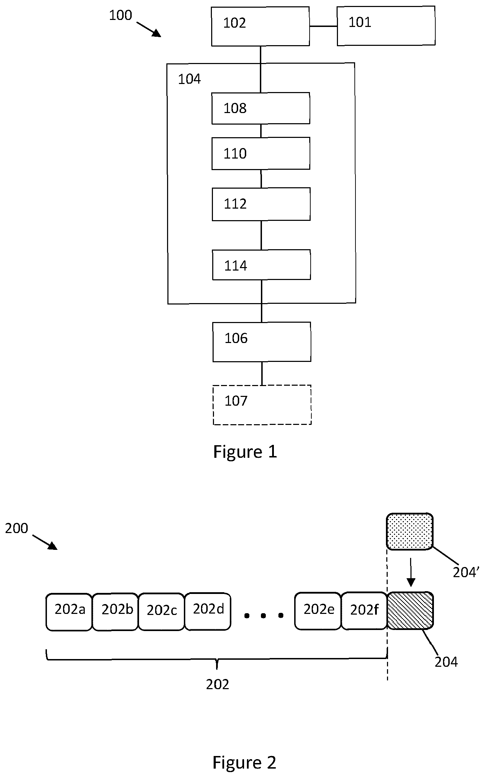

Figure 1 illustrates a method 100 for producing video data of a virtual race. The method 100 comprises selecting 101 a real-world race on which a virtual race is to be based. The real-world race may any suitable race which has taken place prior to the generation of the virtual race video data and for which video data has already been captured and stored. By "real-world" or "real-life" we mean an event that has actually taken place rather than a fictious event. The real-world race may be selected by receiving a user input to select a particular event, or a type of sport or competition, in which the user is interested. In some embodiments, the real-world race may be determined randomly by the method 100. In yet other embodiments, the real-world race can be determined according to a schedule. For example, a virtual race based on a certain real-world event may be scheduled to take place at certain times of the day or at certain intervals.

The method 100 comprises determining 102 a randomly generated outcome of the virtual race. The outcome may be generated by using a random number generator used to generate a random order in which the competitors in the virtual race finish. Where a wager is to be placed on the virtual race a certified source may be used to randomly generate the race outcome. The randomly generated outcome is based on the competitors in the real-world race on which the virtual race is to be based. For example, the starting competitors of the real-world race may be determined and their finishing order randomised. In some embodiments, if the random order is the same as the real-world order that random result may be discounted so that the virtual race cannot have the same finish order as the real-world race on which it is based.

The method 100 further comprises obtaining 104 virtual race video data which is representative of the virtual race and which corresponds to the randomly generated outcome. The structure of the virtual race video data 200 is illustrated in Figure 2. The virtual race video data 200 comprises audio and/or video content related to the virtual race. As can be seen in Figure 2, the virtual race video data 200 comprises race video clips 202 (i.e. real-world video clips) recorded from the corresponding real-world race. Six race video clips 202a-f are shown in Figure 2, although there could be any number. The race video clips 202 include video footage of the real-world race up to, but not including, the finish of the race. This may include video footage of the race itself but also introductory footage of the competitors before the race, footage of pundits discussing the race, or any other video footage associated with the race.

In the example shown in Figure 2, the video clips 202 show highlights of the real-world race from which they were recorded. The recorded video data of the real-world race may therefore be edited into a plurality of clips that show only highlights of the action rather the entire duration of the race. This may make the resulting virtual race video data shorter and more entertaining to watch. The race video clips 202 may, for example, be approximately 60 seconds in combined total length. The separate video clips 202a, 202f may be displayed in a gapless playback sequence. In other embodiments, the video clips 202 may include the entire footage of the real-world race. More generally therefore, there may be at least one race video clip 202. If there is a single race video clip that may include the footage of the entire race (and any supporting content before the race) with no editing to reduce its length.

The virtual race video data 200 obtained in step 104 of the method 100 further includes a virtual finish video clip 204. The virtual finish clip 204 is appended (i.e. added at the end) to the race video clips 202. The virtual finish video clip 204 may be a modified real-world finish clip 204' recorded from the real-world race on which the virtual race is based.

The virtual finish clip 204 comprises video footage of the real-world race which has been modified to represent a race result that corresponds to the outcome of the virtual race rather than the result of the real-world race. As will be described in further detail below, the images making up the video footage may be digitally modified or manipulated so that they depict a different race finish order. This may include changing the appearance of the competitors and/or the position of the competitors in the video frame with respect to one another to change the race outcome. In some embodiments, the video footage may be modified in real time so that it matches the randomly generated results. In other embodiments, the video footage may be modified in advance of the randomly generated result being determined. In that case, a pre-generated virtual finish clip is selected based on the randomly generated result.

The virtual race video data 200 of the present application allows a realistic representation of a race without using highly computer-resource intensive animation to create a video of an entire virtual race. This therefore reduces the computer resources and/or time required to produce virtual races and allows improved realism and user experience.

In some embodiments, the virtual finish clip 204 comprises video footage of a real-world race that is different from the real-world race from which the race video clips 202 are taken. In other words, the race video clips 202 and virtual finish clip 204 may therefore be derived from footage of different real-life events.

Once the virtual race video data 200 has been obtained, the method 100 comprising sending the virtual race video data 200 to a display of the computing device (e.g. user device) on which the video is to be displayed. This may include sending the video data to a device located remotely from where the video data is obtained/generated. Alternatively, the video data may be generated and displayed at the same device.

The method 100 may further include the display 107 of virtual race video data 106. The method 100 may therefore be a computer implemented method for producing and displaying video data of a virtual race.

Figure 1 illustrates an embodiment in which the step of obtaining 104 the virtual race video data 200 comprises modifying the finish clip 204 in real time based on the randomly generated outcome of the virtual race. The step of obtaining the virtual race video data is therefore carried out once a corresponding real-world race and randomly generated result have been determined. In the embodiment of Figure 1, obtaining 104 the virtual race video data first comprises obtaining 108 one or more race video clips 202 from an archive. The archive is configured to store a plurality of video clips corresponding to footage of a plurality of different real-world races. Those real-world races are any suitable event on which the virtual race can be based, and which have occurred prior to initiation of the virtual race. The archive may be any suitable computer archive of video data. It may be located at, or remotely, from the computing device at which the virtual race video data are generated.

By generating the virtual finish clips 204 in real time a large database of virtual finish clips is not required. This may reduce the amount of computer storage space needed.

Obtaining 104 the virtual race video data further comprises obtaining 110 a real-world finish video clip 204' from the archive of video clips. The finish video clip 204' may comprise footage of the same or a different real-world race as that of the race video clip(s) 202. The real-world finish video clip 204' to be modified may be selected such that the amount of modification required to illustrate a race result corresponding to the outcome of the virtual race is minimised. For example, a real-world finish video clip 204' having a result that would require fewer (or the fewest) modifications or degree of modifications to the appearance or relative position of the competitors to achieve the required virtual finish clip 204 may be selected. The method may therefore comprise determining if the real-world finish clip of the same real-world event from which the one or more real-world race clips are taken is suitable or whether a real-world finish clip from another event should be used instead.

Once the source video footage has been obtained from the archive, obtaining 104 the virtual race video data comprises modifying 112 the real-world finish video clip 204' to generate the virtual finish video clip 204 according to the randomly generated outcome of the virtual race. Once generated, the virtual finish video clip 204 is appended 114 to the one or more race video clips 202 (e.g. so that it is shown in sequence after the last race clip). The virtual finish video clip 204' may be appended such that a smooth transition from the race clips 202 to the virtual finish clip 204 is provided.

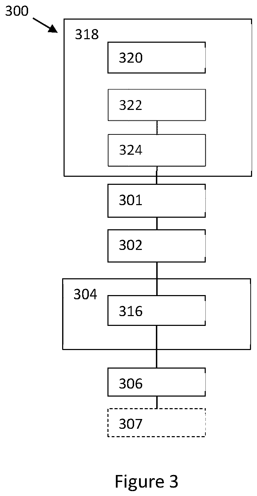

Referring now to Figure 3, an alternative embodiment of a method 300 for producing video data of a virtual race is illustrated. The method 300 includes some steps corresponding to the method 100 illustrated in Figure 1 which have been labelled with corresponding reference numbers. Anything described above in connection with Figures 1 and 2 may be used in combination with the embodiment of Figure 3, and *vice versa.*

In the method 300 shown in Figure 3 the virtual race video data 200 is obtained from an archive of pre-generated virtual race video data rather than being generated in real time. This may allow more time in which to generate suitable virtual finish clips and mean less computing power is needed compared to real-time generation.

The method 300 includes selecting 301 a real-world race on which a virtual race is to be based and determining 302 a randomly generated outcome in the same way as described above in connection with Figure 1.

The method 300 also further comprises obtaining 304 virtual race video data 200 which is representative of the virtual race and which corresponds to the randomly generated outcome. In this embodiment, obtaining 304 the virtual race video data 200 comprises obtaining 316 virtual race video data 200 from an archive. The archive is configured to store pre-generated virtual race video data corresponding to a plurality of virtual races each having a different outcome. The virtual race video data 200 is selected such that it has an outcome corresponding to the randomly generated outcome of the virtual race.

Once the virtual race video data 200 has been obtained in step 304 the method 300 comprises sending 306 the data for display similarly to the embodiment of Figure 1. The method 300 may further include the display 307 of the virtual race video data 200. The method 300 may therefore be a computer implemented method for producing and displaying video data of a virtual race.

Referring again to Figure 3, the method 300 further comprises generating 318 the archive of virtual race video data so that it is available for later use. The steps required to generate the archive may be carried out prior to a real-world race being selected in step 301. In some embodiments, the generation of the archive may be on-going such that further virtual race video data 200 is generated and added to the archive as real-world events take place. This may allow the possibility of virtual races to be expanded over time.

To generate 318 the archive, the method 300 comprises obtaining 320 one or more race video clips 202 and a corresponding real-world finish video clip 204' from an archive storing video clips corresponding to a plurality of real-world races similarly to as described above. Once a source of video footage of a real-world event is obtained, generating 318 the archive comprises modifying 322 the real-world finish video clip 204' to generate a plurality of virtual finish video clips 204. The virtual finish video clips 204 correspond to different possible outcomes of the respective real-world race. The plurality of virtual finish video clips 204 may correspond to all of the possible outcomes of the respective real-world race (optionally excluded the real outcome) so that any result generated in step 302 can be represented. Once generated, the virtual finish clips 204 are each appended 324 to a separate copy of the one or more race video clips 200. A plurality of virtual race video data sets 200 are therefore generated having a plurality of different results which can then be stored in the archive for later use. In some embodiments, only a single copy of the one or more race video clips may be stored, along with the plurality of virtual finish clips. In other embodiments, a plurality of complete sets of clips forming the virtual race data 200 may be stored.

As the number of competitors in a race increases the number of possible finish combinations of the top three or four places increases considerable. For example, a race with 6 competitors has 120 permutations for the top three places. A race of 15 competitors however has 32760 combinations for the top four places. The methods of the present application allow an appropriate finish from a reduced library (3-5 finishing sequences per event) to be added to the end of the real-world race footage.

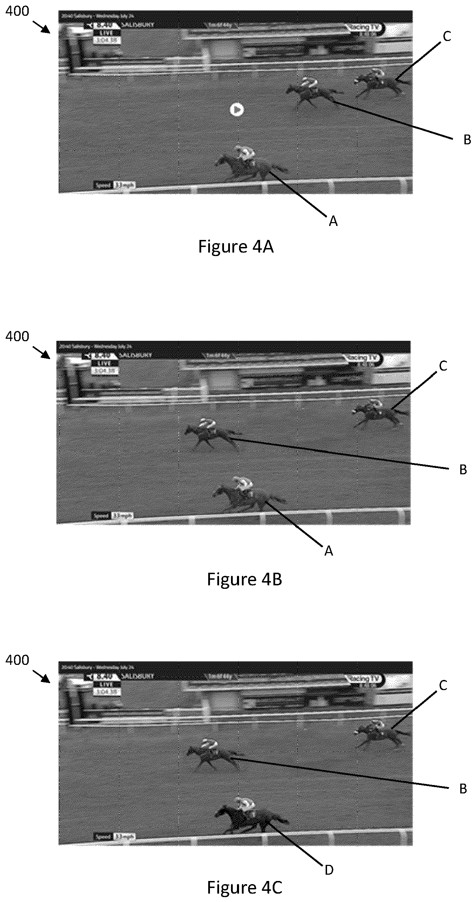

The methods 100, 300 described above may use any suitable video editing or manipulation technique known in the art to modify a real-world finish clip 204' to create a virtual finish clip 204. Various modifications that can be made to the finish clip 204' are shown in Figures 4A to 4D. In these examples the virtual race is a virtual horse race. This is however only exemplary, and the same or similar modifications could be made to other types of virtual race.

Figures 4A to 4D each show a frame of the real-world and virtual finish clips 204, 204' where the first competitor is about cross the finish line of the race. Figure 4A shows a real-world finish clip 204' before any modifications have been carried out. Three competitors are visible in the real-world finish clip 204': competitor A, competitor B and competitor C. The three competitors are shown about to cross the finish line, with competitor A being in first position. In some embodiments, the real-world race footage used to generate the virtual race video data 200 may correspond to races in which there is a "clean" finish i.e. the top three (or four or five) competitors are within the finish frame and their relative positions are easily visible. This may aid generation of the virtual finish clip 204.

The real-world finish video clip 204' may be modified by altering the position of the image of one or more of the competitors of the respective real-world race to alter the outcome illustrated. An example of this is shown in Figure 4B. In this example, the image of competitor B has been moved within the frames of the real-world finish clip 204' to produce a virtual finish clip 204. The position of competitor B has been changed so that the finish order is modified from competitor A being first, competitor B being second and competitor C being third (i.e. A/B/C) to a finish order of B/A/C.

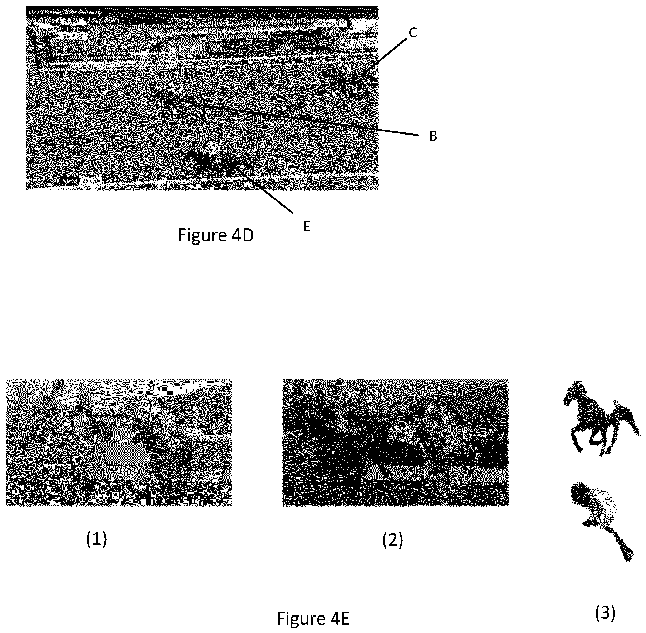

Additionally, or alternatively, the appearance of one or more of the competitors of the respective real-world race may be altered. This may include altering the colour of (or part of) the image of one or more of the competitors. For example, the strip or livery of a competitor may be altered so that they appear as a different competitor. An example of this is shown in Figure 4C where the horse of competitor A has been lightened in colour from a tan coloured horse to a dark brown horse to create an image of competitor D. The finish order is therefore changed from A/B/C to a finish order of B/D/C. Another example is shown in Figure 4D in which the colour of the rider of competitor A has been changed from orange to green to create an image of competitor E and a finish order of B/E/C.

Figure 4A shows an example of how the clips making up the virtual race video data 200 can all be derived from footage of the same real-world race or event. As can be seen in Figures 4A and 4B the order of the finishes is changed to match the randomly generated result.

Figures 4C and 4D show examples of how the clips making up the virtual race video data 200 can be derived from footage of different real-world races or events. In the case of Figure 4C, the one or more race clips 202 may be taken from footage of a real-world race involving competitors B, C and D. In order to produce the required virtual finish order, a real-world finish clip of a race involving competitors A, B and C can be used. The images of competitor A are edited so that the resulting virtual finish clip shows competitors B, C and D finishing in the required order. Similarly, in Figure 4D a clip from a real-world race having competitors A, B and C may be used to add to footage of a real-world race with competitors B, C and E.

Although only three competitors are illustrated in the clips shown in Figures 4A to 4D the virtual race may include a greater or smaller number of competitors. Additional competitors may be shown in the one or more race clips and may optionally be shown in the virtual finish clip. In some embodiments, fewer competitors (e.g. the top three or top four or top five) are shown in the real-world and virtual finish clip 204, 204' compared to the total number shown in the one or more race clips 200. This may reduce the amount of modification required to achieve the randomly generate finish order.

Figures 4A to 4D illustrate examples of how a real-world finish clip 204' can be modified to produce the required virtual race finish clip 204. The skilled person will understand that any suitable video editing technique can be used to modify the real-world finish clip 204'. This may include AI techniques, Visual FX, computer graphics, computer vision and graphical rendering techniques. The AI techniques may make use of an artificial neural network which has been trained to identify the image of competitors (or certain parts of the image of a competitor, such as a livery colour/design or a number) within video of a real-world race.

One example of the use of an AI based automatic masking and segmentation technique is illustrated in Figure 4E. Panel (1) of Figure 4E shows a frame of the real-world finish clip 204' being segmented, Panel (2) shows one of the competitors being identified and Panel (3) shows feature extraction for editing/manipulation.

In some embodiments, modifying the real-world finish clip 204' may comprise performing motion tracking, background/feature extraction and over-painting. For example, motion tracking may be used to identify the image(s) of competitors (or parts of the competitors) within the video data. The image of the competitors and/or the background may then be extracted. Over-painting can then be used to re-colour all or part of the extracted image of some (or all) of a competitor. For example, in the case of horse racing described above, the jockey and/or the horse may be digitally edited given inputs of the target horse texture and target jockey texture. The methods of the present application effectively drape a 3D 'overlay' onto the extracted images of the competitors in the finishing clip to render a new version of the finish as required by the randomly generated result of the virtual race. Any number of competitors within the finish clip may be edited as required to produce the required virtual finish clip.

The methods of the present application may use any suitable imaging processing technique or techniques to segment the images within the video data and extract features. Once extracted, any suitable technique or techniques can be used to alter those features and apply them to the original image to change the appearance and/or position of the images of the competitors.

In some embodiments, virtual finish video clip 204 and the real-world finish video clip 204' may comprise both audio data and video data. The modification steps 112, 322 described above may therefore also include modifying audio data so that it corresponds to the required virtual race finish order. In other words, audio data of the real-world finish video clip 204' may be modified to generate the audio data of the virtual race video clip 204. Altering the audio data of the real-world finish clip 204' may comprise altering commentary audio data such that it corresponds with modifications to the finish order. Altering the commentary may comprise using an AI technique to clone the race commentator(s) voices and modifying the real-world commentary with AI generated commentary. In some embodiments, the AI generated commentary may replace the commentary of the real-world finish 204' clip entirely. By using AI generated audio in this way, the commentary of the virtual finish may match that of the rest of the race video clip(s) 202.

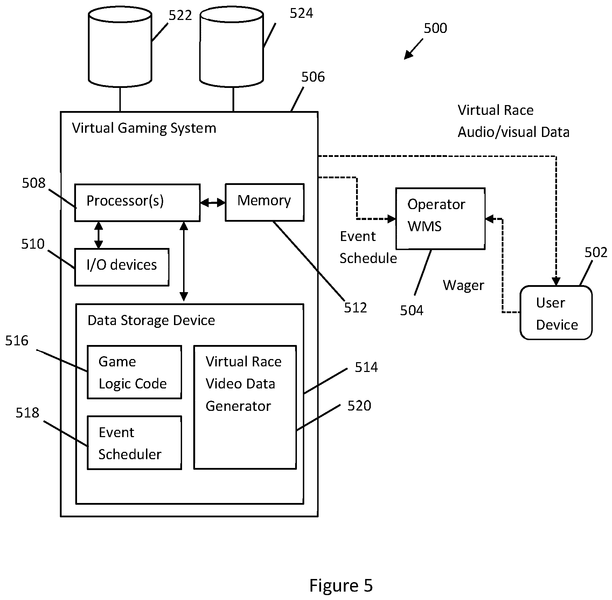

The present application further provides a computer system/apparatus/device configured to carry out any of the methods disclosed or claimed herein. As discussed above, the method of producing (and displaying) video data of a virtual race may be incorporated into a virtual game. The methods of the present application may therefore be carried out by a virtual game configuration 500, an example of which is illustrated schematically in Figure 5.

The virtual game configuration 500 operates a virtual game in which a user (not shown) may place a wager from a user device 502. The user device may be a virtual game console which is a dedicated device configured to run the virtual game. In other embodiments, the user device 502 may be a mobile computing device (e.g., smartphone, laptop, tablet device, smartwatch, smart wearable, etc.). In such embodiments, the user device may comprise a virtual game application installed thereon to operate the virtual game.

The user device 502 may receive inputs from the user (e.g., via touch screen inputs, button activations, hand gestures, etc.) and displays content associated with operation of the virtual game (e.g., via an integrated display screen). The user device is configured to display the virtual race video data 200. The content associated with operation of the virtual game may be displayed at a local display of the user device. The user device may comprise a separate connected display screen (e.g. monitor, TV screen) on which information is displayed or projected onto. (The projection referred to herein is not limited to operation on a flat screen, or two-dimensional projection, as three-dimensional projection (e.g., via holographic projector) may be alternatively utilized to project the associated content.)

The virtual game configuration 500 comprises an operator wager management system ("WMS") 504 which is configured to receive the wager from the user device 502. The WMS (and other components of the virtual game configuration 500) may be connected by any suitable wired and/or wireless network (e.g., via a computerized network, telecommunications network, wired network, etc.). After receiving the wager, the operator WMS 504 is configured to await an outcome of the virtual game so that the operator WMS 504 may determine what prize, if any, is won by the user and/or additional users. In other words, the operator WMS 504 is associated with a gaming entity (e.g., casino, lottery, etc.) whose responsibilities include, but are not limited to, receiving wagers and distributing prizes.

The virtual gaming configuration 500 further comprises a virtual gaming system 506 that schedules a virtual game and generates content to be displayed during the virtual game (e.g. using the methods disclosed or claimed herein). Included as componentry within the virtual gaming system 506 are one or more processors 508, various input/output ("I/O") devices 510, a memory device 512, and a data storage device 514. The data storage device may be any suitable (non-transitory) machine readable storage medium.

The processor(s) 508 execute various computer code within the memory device 512. For instance, the processor(s) 508 retrieve game core logic code 516, event scheduler code 518, and virtual race video data generator code 520 from the data storage device 514 for operation in the memory 512.

The game core logic code 516 allows the processor(s) 508 to operate the virtual game. For example, the game core logic code 516 may cause the processor(s) 506 to carry out the steps of selecting 101, 301 a real-world race on which a virtual race is to be based as discussed above. The game core logic code 516 may further cause the processor(s) to carry out the step of determining an outcome of the virtual race 102, 302 described above. Accordingly, the game core logic code 516 may require that random data be obtained from a certified random source (e.g., a particular random number generator ("RNG")) to generate the random finish order of the virtual race.

Further, the event scheduler code allows the processor(s) 508 to schedule events for operation of the virtual game. For example, the event scheduler code 508 may indicate that the virtual game is scheduled to be played every twenty minutes. (Other time intervals, specific times, etc. may be utilized instead.) The schedule of such time increments may be sent by the processor(s) 508 executing the event scheduler code 518 according to a different time interval (e.g., daily transmission of schedule for virtual game operated at twenty-minute intervals).

Also, the event scheduler code 518 allows the processor(s) 508 to inform the operator WMS 504 that wagering is opened or closed for a particular iteration of the virtual game. Accordingly, the operator WMS 504 may receive wagers prior to and/or during the virtual game based on whether or not wagering is allowed at a given time, as determined by the processor(s) 508 when executing the event scheduler code 518. The processor(s) 508 may also send event results, as determined via execution of the event scheduler code 518, to the operator WMS 504.

The communications between the virtual gaming system 506, or any componentry thereof, and the operator WMS 504 may be performed through a network (computerized, telecommunications, wired, wireless etc.). Although the virtual gaming system 506 is shown as a single entity in Figure 5 that may not be the case. In some embodiments, the virtual gaming system 506 may be distributed over more than one computing device each having a respective processor, memory and data storage devices to store computer code in order to perform the functions of the virtual gaming system.

In addition to operating and scheduling the virtual game, the processor(s) 508 may execute the virtual race video data generator code to obtain virtual race video data 200 for display at the user device 502. Execution of the virtual race generator code may therefore cause the processor(s) to perform steps 104 and 304 of methods 100 and 300 respectively as described above. For example, the video data generator code may comprise computer executable instructions to allow the processor(s) to perform the steps shown in Figure 1 - i.e. to obtain 108 one or more race video clips, obtain 110 a real-world finish video clip 204', modify 112 the real-world finish video clip 204' to generate the virtual finish video clip 204 and append 114 the virtual finish clip 204 to the race video clips 202. As can be seen in Figure 5, the virtual gaming system 506 is in communication with a first computer storage device 522 which is configured to store pre-recorded content (i.e. footage of past real-world events). The first computer storage device 522 is configured to store race video clips 200 and real-world finish video clips 204' which can be obtained by the processor(s) 508.

The virtual race video data generator code 520 may additionally or alternatively comprise computer executable instructions which, when executed, cause the processor(s) 508 to perform the steps shown in Figure 3. For example, the video data generator code may comprise computer executable instructions to allow the processor(s) 506 to obtain 316 virtual race video data 200 from an archive of pre-generated virtual race video data 200. The virtual gaming system 506 is in communication with a second computer storage device 524 which is configured to store an archive of pre-generated virtual race video data 200 which can be obtained by the processor(s) when carrying out step 304. The first and second computer storage devices 522, 524 may be any suitable computer memory/database and can be located locally or remotely from the virtual gaming system 506. The first and second data storage devices 522, 524 may be separate as shown in Figure 5 or may be integrated.

The virtual race video data generator code 520 may further comprise computer executable instructions which, when executed, cause the processor(s) 508 to perform steps 320, 322 and 324 described above to generate the archive of pre-generated virtual race video data. For example, the virtual race video generator code 520 may cause the processor(s) 508 to obtain 320 race video clips and a corresponding real-world finish video clip 204' (e.g. from the first computer storage device 522), modify 322 the real-world finish video clip 204' to generate a plurality of virtual finish video clips 204, and append each of the virtual finish clips 204 to the race video clips to form a plurality of different virtual race video data sets 200. Once generated, the virtual race video data sets may be stored in the second computer storage device 524 for later use.

In embodiments where the virtual race video data 200 is generated only in real time the second data storage device 524 may be omitted.

Once suitable virtual race video data 200 has been obtained, the processor(s) 508 may send 106, 306 data through a network (computerized, telecommunications, wired, etc.) to the user device 502 for display 107, 307 at the virtual gaming console 502. This may be the same network via which the information is sent from the user device to the virtual gaming system. The video data may be sent directly to the user device or may be sent indirectly (for example the processor(s) 508 may send the rendering data to the operator WMS 504, which then sends the video data to the user device 502).

Although the virtual gaming system 506 is depicted as being distinct from the user device 502, the virtual gaming system 506, or componentry thereof, may be integrated within the user device 502 in an alternative configuration. That may especially be the case where the user device is a virtual gaming console. As a result, each virtual gaming console may schedule an iteration of a virtual game specific to that particular virtual gaming console rather than relying on a centralized server. Further, the virtual race video data may be provided directly, without a network, to a display screen of the virtual gaming console in such an alternative configuration.

In embodiments where the generated virtual race video data 200 is not used for placing of a digital wager the operator WMS 504 may be omitted.

The skilled person will understand that the methods and apparatus described herein are exemplary. Components and systems described as individual parts may not be physically separate from one another and so may be located at a single location or they may be distributed between several networked components. In some embodiments, the functionality of the apparatus/systems described herein may be divided differently between the apparatus/systems, or other apparatus/systems provided to perform any of the functions described herein.

The apparatus, systems and method steps described herein may be implemented in software executed by a processor, hardware or a combination of the two. In some embodiments, the apparatus, systems and method steps described herein may be implemented by one or more computing devices. Such computing devices may include any device that has a general, multipurpose or single purpose processor or processors as described above. For example, a computing device used to implement the methods/apparatus of the present application may be a PC, laptop computer, set top box, cell phone, smart phone, tablet device smart wearable device portable media player video player gaming console etc. A computing device suitable to implement the methods described herein may generally comprise one or more processors, network interfaces, input/output interfaces and memory. The memory may include computer or machine readable memory forming a computer/machine readable medium. The network interfaces may be configured for communication via any suitable network including a local area network or wide area networks such as the Internet or enterprise network. The skilled person will appreciate that the memory may be provided by a variety of components including a volatile memory, a hard drive, a non-volatile memory, etc.

The memory may store a set of computer readable instructions, data structures, program modules or other data. The computer-readable media may not include temporary computer readable media (transitory media), such as a modulated data signal and a carrier wave.

In one aspect of the present application, there is provided a machine/computer readable medium or computer program product containing instructions which, when read by a machine or computer, cause any of the transaction processing methods, or parts thereof, described or claimed herein to be performed.

The machine readable medium may be any of the following: a CDROM; a DVD ROM / RAM (including -R/-RW or +R/+RW); a hard drive; a memory (including a USB drive; an SD card; a compact flash card or the like); a transmitted signal (including an Internet download, ftp file transfer of the like); a wire; etc. The machine-readable medium may be a non-transitory computer readable medium.

Various modifications will be apparent to the skilled person without departing form the scope of the claims. The embodiments described above should be understood as exemplary only. Any feature of any of the aspects or embodiments of the disclosure may be employed separately or in combination with any other feature of the same or different aspect or embodiment of the disclosure and the disclosure includes any feature or combination of features disclosed herein.

## Claims

1. A computer implemented method for producing video data of a virtual race for display at computing device, the method comprising:
determining a randomly generated outcome of the virtual race;
obtaining virtual race video data which is representative of the virtual race and which corresponds to the randomly generated outcome, wherein the virtual race video data comprises:
- one or more race video clips recorded from a real-world race occurring prior to initiation of the virtual race at the computing device; and
- a virtual finish video clip appended to the one or more race video clips, wherein the virtual finish video clip is a modified real-world finish clip recorded from the, or another, real-world race occurring prior to the initiation of the virtual race, the real-world finish clip having been modified to represent a race result that corresponds to the outcome of the virtual race; and
- sending the virtual race video data to a display of the computing device.

2. The computer implemented method of claim 1, wherein obtaining the virtual race video data comprises modifying the real-world finish clip in real time based on the randomly generated outcome of the virtual race.

3. The computer implemented method of claim 2, wherein obtaining the virtual race video data comprises:
obtaining the one or more race video clips from an archive storing a plurality of video clips corresponding to a plurality of real-world races which have occurred prior to initiation of the virtual race;
obtaining the real-world finish video clip from the archive of video clips;
modifying the real-world finish video clip to generate the virtual finish video clip according to the randomly generated outcome of the virtual race; and
appending the virtual finish video clip to the one or more race video clips.

4. The computer implemented method of claim 2 or claim 3, wherein the real-world finish video clip to be modified is selected such that the amount of modification required to illustrate a race result corresponding to the outcome of the virtual race is minimised.

5. The computer implemented method of any preceding claim, wherein the virtual race video data is obtained from an archive of pre-generated virtual race video data corresponding to a plurality of virtual races each having a different outcome.

6. The computer implemented method of claim 5, further comprising generating the archive of virtual race video data by:
obtaining one or more race video clips and a corresponding real-world finish video clip from an archive storing video clips corresponding to a plurality of real-world races;
modifying the real-world finish video clip to generate a plurality of virtual finish video clips corresponding to different possible outcomes of the respective real-world race; and
appending each of the virtual finish video clips to the one or more race video clips.

7. The computer implemented method of claim 6, wherein the plurality of virtual finish video clips correspond to all of the other possible outcomes of the respective real-world race.

8. The computer implemented method of any preceding claim, wherein the real-world finish video clip is modified by altering:
- the position of the image of one or more of the competitors of the respective real-world race to alter the outcome illustrated; and/or
- the appearance of one or more of the competitors of the respective real-world race to alter the outcome illustrated.

9. The computer implemented method of any preceding claim, wherein the real-world finish video clip is modified using imaging processing techniques including motion tracking, background/feature extraction and over-painting.

10. The computer implemented method of any preceding claim, wherein the real-world finish video clip is modified using an AI based process configured to identify and alter the position and/appearance of features within the real-world finish video clip.

11. The computer implemented method of any preceding claim, wherein the virtual finish video clip comprises audio data and video data and is modified by altering commentary audio data such that it corresponds with modifications to the race result.

12. An apparatus for producing video data of a virtual race for display at a computing device, the apparatus comprising one or more computer processors and a data storage device in communication with the one or more processors, the data storage device comprising code that, when executed, causes the one or more processors to perform the method of any preceding claim.

13. A computer apparatus/device/system comprising a processor configured to perform the method of any of claims 1 to 11.

14. A computer program comprising instructions which, when the program is executed by a computer, cause the computer to carry out the method of any of claims 1 to 11.

15. A non-transitory computer-readable storage medium comprising instructions which, when the program is executed by a computer, cause the computer to carry out the method of any of claims 1 to 11.
